Europäisches Patentamt

European Patent Office

Office européen des brevets

(19)

(11) Veröffentlichungsnummer: **0 122 640**
**A2**

(12) # EUROPÄISCHE PATENTANMELDUNG

(21) Anmeldenummer: **84104414.2**

(22) Anmeldetag: **18.04.84**

(51) Int. Cl.³: **C 04 B 21/06**

(30) Priorität: **18.04.83 SE 8302147**

(43) Veröffentlichungstag der Anmeldung:
**24.10.84 Patentblatt 84/43**

(84) Benannte Vertragsstaaten:
**AT BE DE FR GB IT LU NL**

(71) Anmelder: **Perstorp AB**
**Box 5000**
**S-284 00 Perstorp(SE)**

(72) Erfinder: **Ohlsson, Stig Lennart**
**Svenstorp Pl.717**
**S-260 70 Ljungbyhed(SE)**

(72) Erfinder: **Berthou, Jan-Olov Krister**
**Krutvägen 22**
**S-281 00 Hässleholm(SE)**

(74) Vertreter: **Hansen, Bernd, Dr.rer.nat. et al,**
**Hoffmann, Eitle & Partner Patentanwälte Arabellastrasse**
**4**
**D-8000 München 81(DE)**

(54) Verwendung von feinkörnigem Pentaerythrit, Dipentaerythrit oder einer Mischung dieser Verbindungen als porenbildendes Additiv für poröse Keramikprodukte, wie keramische Schleifscheiben und keramische Filter.

(57) Verwendung von feinkörnigem Pentaerythrit, Dipentaerythrit oder einer Mischung dieser Verbindungen als porenbildendes Additiv für poröse Keramikprodukte, wie keramische Schleifscheiben und keramische Filter.

EP 0 122 640 A2

Croydon Printing Company Ltd.

– 1 –

Verwendung von feinkörnigem Pentaerythrit, Dipentaerythrit oder einer Mischung dieser Verbindungen als
porenbildendes Additiv für poröse Keramikprodukte,
wie keramische Schleifscheiben und keramische Filter

Die Erfindung betrifft die Verwendung eines feinkörnigen porenbildenden Additivs bei der Herstellung
von porösen keramischen Produkten, wie keramischen
Schleifscheiben und keramischen Filtern.

Poröse keramische Schleifscheiben sind seit langer
Zeit bekannt. Solche Produkte werden beispielsweise
in den US-PSen 2 290 876 und 4 086 067 beschrieben.
Die Poren in diesen Schleifscheiben sind aus verschiedenen Gründen wünschenswert. Beispielsweise geben
sie Raum für die Entfernung von abgetrennten Metallspänen. Weiterhin wirken die Poren bei einem Zerkleinern hohen Temperaturen an der Oberfläche des zu zerkleinernden Materials entgegen.

Bei der Herstellung von derartigen porösen keramischen Schleifscheiben werden die verschiedenen Komponenten, wie die Schleifkörner, der keramische Binder, das Benetzungsmittel und feinkörnige porenbildende
Additive in vielen Stufen vorgemischt.

Dann werden die so erhaltenen Mischungen zu sogenannten Scheibenarbeitsstücken verpresst. In diesen Scheibenarbeitsstücken sind Teilchen eines porenbildenden Additivs gleichmässig verteilt. Diese Teilchen werden im weiteren Herstellungsverfahren weggebrannt
und dadurch erhält man die erwünschten Poren. Als porenbildende Additive sind in diesem Zusammenhang Teilchen aus Dichlorbenzol, Naphthalin, Walnussschalen,
Kork, Senfsamen und Kunststoffen, wie Polyethylen,
Polyester, Polystyrol, Polyamid und Phenol-Formaldehydharze bekannt.

Die bekannten porenbildenden Mittel weisen alle einen
oder mehrere Nachteile auf. Einige dieser Mittel,
wie Naphthalin und Dichlorbenzol, ergeben innerhalb
und ausserhalb der Werksanlagen bei der Herstellung
von Schleifscheiben unangenehme Gerüche. Darüber
hinaus bildet Dichlorbenzol einen unerwünschten Überzug an der Innenseite der beim Brennen verwendeten
Öfen. Die anderen porenbildenden Mittel beeinflussen
die Eigenschaften der Schleifscheiben in negativer
Weise. In einigen Fällen erhalten die Schleifscheiben
eine zu niedrige Festigkeit oder es entstehen unregelmässig verteilte Poren.

Erfindungsgemäss wurde nun überraschend gefunden,
dass feinkörniges Pentaerythrit, Dipentaerythrit oder
eine Mischung dieser Verbindungen als porenbildendes Material für poröse keramische Produkte, wie keramische Schleifscheiben und keramische Filter, verwendet werden können.

Die neuen Additive verursachen keine störenden Gerüche oder andere Nachteile bei der Herstellung der keramischen Produkte. Darüber hinaus sind poröse keramische Schleifscheiben, die man unter Verwendung der erfindungsgemässen porenbildenden Mittel herstellt wenigstens so gut wie die bisher hergestellten, ohne dass aber die unerwünschten umweltverschmutzenden Bedingungen vorliegen.

Die durchschnittliche Teilchengrösse der neuen Additive liegt im allgemeinen bei 30 bis 3.000 μm und beträgt vorzugsweise 300 bis 1.500 μm.

Die Erfindung wird in den nachfolgenden Beispielen ausführlich beschrieben. Beispiele 1 und 2 beziehen sich auf Vergleichsversuche mit bekannten porenbildenden Mitteln und Beispiele 3 und 4 zeigen Ausführungsformen gemäss der Erfindung.

Beispiel 1

580 g Schleifkörner aus einem speziellen geschmolzenen Aluminiumoxid wurden in einen mit einem Rührer versehenen Mischer gegeben. Gemäss FEPA-Standard hatten 25 Gew.% der Körner die Grösse 54, 50 Gew.% der Körner die Grösse 60 und 25 Gew.% der Körner die Grösse 70.

200 g Befeuchtungsmittel, bestehend aus einer 10 Gew.%-igen Dextrinlösung in Wasser, wurden unter Rühren in den Mischer gegeben.

140 g pulverförmiger keramischer Binder, bestehend aus 75 Gew.% Feldspat, 23 Gew.% Kaolin und 20 Gew.% Borax, sowie 80 g eines bekannten porenbildenden Additivs, bestehend aus pulverisiertem Dichlorbenzol mit einer durchschnittlichen Teilchengrösse von 800 μm wurden vorgemischt und dann in den Mischer unter Rühren gegeben. Das Vermischen mit den anderen Komponenten in dem Mischer wurde sorgfältig durchgeführt, bis man eine homogene Schleifzusammensetzung erzielte.

Das Dichlorbenzol in der erhaltenen Schleifzusammensetzung wies beim Lagern nur eine kurze Stabilität auf. Deshalb musste man die Schleifzusammensetzung schnell anwenden. Dies ist natürlich ein Nachteil. Darüber hinaus weist Dichlorbenzol einen unangenehmen Geruch auf. Deshalb ist es aus Gesundheitsgründen und Gründen der Umweltverschmutzung wenig befriedigend.

Die Schleifzusammensetzung wurde zur Entfernung von möglichen Klumpen gesiebt.

Anschliessend wurde ein Schleifscheibenstück aus der Schleifzusammensetzung in üblicher Weise verpresst. Das Schleifscheibenstück wurde während etwa 24 Stunden bei einer Temperatur von bis zu 60°C vorgetrocknet und mit Dampf behandelt, um eine Rissbildung und eine Oberflächentrocknung zu vermeiden.

Dann wurden die Schleifscheiben-Werkstücke während 20 Stunden mit nach und nach ansteigender Temperatur bis zu einer Maximaltemperatur von etwa 1.200°C gebrannt. Die Maximaltemperatur wurde 6 Stunden aufrecht erhalten. Die anschliessende Abkühlphase der hergestellten Schleifscheibe dauerte etwa 72 Stunden und dann wurde die Schleifscheibe zur Herstellung des Endproduktes nachbearbeitet.

Beim Brennen erzeugte das Dichlorbenzol einen unerwünschten Überzug im Ofen. Weiterhin gibt Dichlorbenzol bei einigen der Verarbeitungsstufen Chlor frei, was korrosiv und gefährlich auf die Umgebung wirkt.

Beispiel 2

598 g Schleifkörner, bestehend aus einem speziellen geschmolzenen Aluminiumoxid, wurden in einen mit einem Rührer versehenen Mischer gegeben. Gemäss FEPA-Standard hatten 25 Gew.% der Körner die Grösse 54, 50 Gew.% der Körner die Grösse 60 und 25 Gew.% der Körner die Grösse 70.

200 g Befeuchtungsmittel, bestehend aus einer 10 Gew.%-igen Dextrinlösung in Wasser, wurden in den Mischer unter Rühren gegeben.

142 g pulverisierter keramischer Binder, bestehend zu 75 Gew.% aus Feldspat, 23 Gew.% aus Kaolin und 2 Gew.% aus Borax, und 60 g eines bekannten porenbildenden Additivs, bestehend aus pulverisiertem Naphthalin mit einer durchschnittlichen Teilchengrösse von 800 μm, wurden vorgemischt und dann in den Mischer unter Rühren gegeben. Das Mischen mit den anderen Komponenten in dem Mischer wurde sorgfältig durchgeführt, bis man eine homogene Schleifzusammensetzung erhielt.

Die Schleifzusammensetzung wurde zur Entfernung von möglichen Klumpen gesiebt.

Anschliessend wurde ein Schleifscheiben-Werkstück aus der Schleifzusammensetzung in üblicher Weise durch Pressen hergestellt. Das Schleif-Werkstück wurde während etwa 24 Stunden bei einer Temperatur von bis zu 90°C vorgetrocknet, wobei Dampf zugeführt wurde, um eine Rissbildung und Oberflächentrocknung zu vermeiden.

Anschliessend wurde das Schleifwerkstück während 20 Stunden mit allmählich ansteigender Temperatur bis zu einer Maximaltemperatur von etwa 1.200°C gebrannt. Die Maximaltemperatur wurde während 6 Stunden aufrecht erhalten. Die anschliessende Abkühlphase bei der hergestellten Schleifscheibe dauerte etwa 72 Stunden und anschliessend wurde die Schleifscheibe nachbearbeitet bis zum Erhalt des Endproduktes.

- 7 -

Bei dem vorerwähnten Herstellungsverfahren ergab Naphthalin einen ausserordentlich unangenehmen Geruch. Deshalb musste man ganz spezielle Vorsichtsmassnahmen einhalten.

## Beispiel 3

607 g Schleifkörner, bestehend aus einem speziellen geschmolzenen Aluminiumoxid, wurden in einen Mischer, der mit einem Rührer ausgestattet war, gegeben. Gemäss FEPA-Standard hatten 25 Gew.% der Körner die Grösse 54, 50 Gew.% der Körner die Grösse 60 und 25 Gew.% der Körner die Grosse 70.

200 g Befeuchtungsmittel, bestehend aus einer 10 Gew.%-igen Dextrinlösung in Wasser, wurden in den Mischer unter Rühren gegeben.

143 g pulverisierter keramischer Binder, bestehend aus 75 Gew.% Feldspat, 23 Gew.% Kaolin und 2 Gew.% Borax, und 50 g porenbildendes Additiv, bestehend aus pulverisiertem Pentaerythrit mit einer durchschnittlichen Teilchengrösse von 800 μm, wurden vorgemischt und dann unter Rühren in den Mischer gegeben. Das Vermischen mit den anderen Komponenten im Rührer wurde sorgfältig durchgeführt, bis man eine homogene Schleifzusammensetzung erhielt.

Die Schleifzusammensetzung wurde zur Entfernung von möglichen Klumpen gesiebt.

Anschliessend wurde ein Schleifscheiben-Werkstück aus der Schleifzusammensetzung in üblicher Weise gepresst. Das Schleifscheiben-Werkstück wurde während etwa 24 Stunden bei einer Temperatur von bis zu 120°C unter Zufuhr von Wasserdampf zur Vermeidung von Rissbildung und einem Austrocknen der Oberfläche vorgetrocknet.

Dann wurde das Schleifscheiben-Werkstück 20 Minuten mit allmählich ansteigender Temperatur bis zu einer Maximaltemperatur von etwa 1.200°C gebrannt. Die Maximaltemperatur wurde 6 Stunden aufrecht erhalten. Die abschliessende Abkühlphase der hergestellten Schleifscheibe dauerte etwa 72 Stunden und anschliessend wurde die Schleifscheibe unter Ausbildung des Endproduktes nachbearbeitet.

Das Pentaerythrit ergab keinerlei Geruchsprobleme oder andere Probleme bei der Herstellung der Schleifscheibe.

Ein Vergleich mit den Schleifscheiben, die gemäss den Beispielen 1 und 2 erhalten wurden, ergab, dass die erfindungsgemäss hergestellten Schleifscheiben eine gleiche Qualität hinsichtlich der Porosität, der Luftdurchlässigkeit, der Festigkeit, der mechanischen Durchdringungsbeständigkeit und der Schleifeigenschaften aufwies.

Beispiel 4

607 g Schleifkörner, bestehend aus einem speziellen geschmolzenen Aluminiumoxid, wurden in einen Mischer, der mit einem Rührer ausgerüstet war, gegeben. Gemäss FEPA-Standard wiesen 25 Gew.% der Körner die Grösse 54, 50 Gew.% der Körner die Grösse 60 und 25 Gew.% der Körner die Grösse 70 auf.

200 g Befeuchtungsmittel, bestehend aus einer 10 Gew.%-igen wässrigen Dextrinlösung, wurden in den Mischer unter Rühren gegeben.

143 g pulverisierter keramischer Binder, bestehend aus 75 Gew.% Feldspat, 23 Gew.% Kaolin und 2 Gew.% Borax, und 50 g porenbildendes Additiv, bestehend aus einer pulverisierten Mischung aus 90 Gew.% Monopentaerythrit und 10 Gew.% Dipentaerythrit, mit einer Durchschnittsteilchengrösse von 800 µm, wurden vorgemischt und dann unter Rühren in den Mischer gegeben. Das Vermischen mit den anderen Komponenten im Mischer wurde sorgfältig durchgeführt, bis man eine homogene Schleifzusammensetzung erhielt.

Die Schleifzusammensetzung wurde zur Entfernung von möglichen Klumpen gesiebt.

Anschliessend wurde ein Schleifscheiben-Werkstück aus der Schleifzusammensetzung in üblicher Weise gepresst. Das Schleifscheiben-Werkstück wurde während etwa 24 Stunden bei einer Temperatur von bis zu 120°C unter Dampfzufuhr zur Vermeidung von Rissbildung und Oberflächenaustrocknung, vorgetrocknet.

Anschliessend wurde das Schleifscheiben-Werkstück
20 Minuten mit ansteigender Temperatur bis zu einer
Maximaltemperatur von etwa 1.200°C gebrannt. Die
Maximaltemperatur wurde während 6 Stunden aufrecht
erhalten. Die anschliessende Abkühlphase bei der hergestellten Schleifscheibe dauerte etwa 72 Stunden und
dann wurde die Schleifscheibe unter Ausbildung des
Endproduktes nachbearbeitet.

Das porenbildende Additiv, das aus einer Mischung
aus Monopentaerythrit und Dipentaerythrit bestand, ergab keinerlei Probleme hinsichtlich des Geruchs, noch
irgendwelche andere Probleme bei der Herstellung der
Schleifscheibe.

Ein Vergleich mit den Schleifscheiben, die gemäss Beispielen 1 und 2 hergestellt worden waren, ergab,
dass die Schleifscheibe gleiche Qualitäten hinsichtlich der Porosität, der Luftdurchlässigkeit, der Festigkeit, der mechanischen Durchdringungsbeständigkeit
und der Schleifqualitäten aufwies.

Wie schon vorher erwähnt, kann man ausser der Herstellung von porösen keramischen Schleifscheiben die porenbildenden Additive gemäss der Erfindung auch bei
der Herstellung von anderen porösen keramischen Produkten, wie keramischen Filtern, verwenden. Solche Filter

- 11 -

kann man beispielsweise zum Filtrieren von Luft, Wasser und von organischen Substanzen einsetzen. Der Vorteil von keramischen Filtern liegt beispielsweise darin, dass man sie bei hohen Temperaturen verwenden kann und dass sie nicht verbrennen.

- 12 -

PATENTANSPRÜCHE

1. Verwendung von feinkörnigem Pentaerythrit, Dipentaerythrit oder einer Mischung dieser Verbindungen
als porenbildendes Additiv für poröse Keramikprodukte, wie keramische Schleifscheiben und keramische Filter.

2. Verwendung gemäss Anspruch 1, dadurch g e k e n n -
z e i c h n e t , dass das porenbildende Additiv
eine Teilchengrösse von 30 bis 3.000 µm, vorzugsweise
300 bis 1.500 µm aufweist.